(19) Europäisches Patentamt
European Patent Office
Office européen des brevets

(11) **EP 3 712 736 A1**

(12) **DEMANDE DE BREVET EUROPEEN**

(43) Date de publication:
**23.09.2020 Bulletin 2020/39**

(51) Int Cl.:
***G05B 23/02*** *(2006.01)*      ***G05B 15/02*** *(2006.01)*
***B01F 3/04*** *(2006.01)*      ***C02F 3/04*** *(2006.01)*
***G06Q 50/10*** *(2012.01)*

(21) Numéro de dépôt: **19305358.4**

(22) Date de dépôt: **22.03.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeur: **L'AIR LIQUIDE, SOCIETE ANONYME POUR L'ETUDE ET L'EXPLOITATION DES PROCEDES GEORGES CLAUDE**
**75007 Paris (FR)**

(72) Inventeur: **BOURGEOIS, Thomas**
**78350 Les Loges-En-Josas (FR)**

(74) Mandataire: **Mellul-Bendelac, Sylvie Lisette**
**L'Air Liquide**
**Direction des Services**
**De la Propriété Intellectuelle**
**75, Quai d'Orsay**
**75321 Paris Cedex 07 (FR)**

(54) **MÉTHODE DE DÉTECTION D'ANOMALIES DANS UNE INSTALLATION DE TRAITEMENT DES EAUX METTANT EN OEUVRE UN APPAREIL D'INJECTION D'OXYGÈNE DANS UN BASSIN D'ÉPURATION**

(57)    Méthode d'opération d'une installation de traitement des eaux, installation munie d'un appareil d'injection d'un gaz comportant de l'oxygène dans un effluent, la méthode comportant une phase de détection d'anomalies dans le fonctionnement de l'appareil, se caractérisant en ce que la phase de détection d'anomalies comporte la mise en oeuvre des mesures suivantes :

- on dispose de données représentatives de l'état de fonctionnement de l'appareil, données comprenant des relevés en fonction du temps du débit de gaz injecté par l'appareil et des relevés en fonction du temps du courant/débit de fluide traversant l'appareil ;

- on dispose d'un système d'acquisition et de traitement de ces données, muni d'un algorithme de traitement de ces données, apte à réaliser les déterminations suivantes :

a) à réaliser une phase d'apprentissage durant laquelle le système acquiert lesdits relevés, établit sur une période de temps d'apprentissage déterminée la courbe de variation de l'intensité du courant traversant l'appareil en fonction du débit de gaz injecté par l'appareil, et définit une zone/enveloppe englobant cette courbe, zone considérée comme délimitant un fonctionnement normal de l'appareil; et

b) à réaliser une phase d'utilisation de l'algorithme où le système acquiert en temps réel, sur une période de temps déterminée, la courbe de variation de l'intensité du courant traversant l'appareil en fonction du débit de gaz injecté par l'appareil, et à déterminer si le signal sort de ladite zone/enveloppe pendant une période de temps considérée comme représentative, qu'il faut conclure qu'une alerte doit être lancée, par exemple pour demander une maintenance prédictive de l'appareil .

EP 3 712 736 A1

**Figure 3**

**Description**

La présente invention concerne le domaine du traitement des eaux.

Et plus précisément la présente invention s'intéresse à la détection d'anomalies de fonctionnement de stations de traitement des eaux, anomalies liées à des disfonctionnement d'appareils d'injection d'oxygène dans les bassins d'épuration. Cet oxygène est utilisé par la biomasse présente dans les bassins pour consommer la pollution présente dans l'eau.
Les documents suivants illustrent des exemples de tels appareils : WO2012160300A1, EP-995 485, FR-2594112A1.

Ces appareils d'injection sont, comme tous robots, sujets à des pannes.

A la connaissance de la Demanderesse, il n'y a pas aujourd'hui de propositions techniques pour détecter à l'avance des pannes sur de tels appareils, les pannes se produisent sur ces installations et elles sont traitées « sur le tas », au cas par cas. Certains acteurs proposent, pour contrer ces pannes, d'effectuer des révisions régulières de ces appareils, voire de les changer régulièrement. Mais ces révisions ou ces changements en avance sont forcément couteux.

La présente invention souhaite alors proposer une nouvelle méthode de détection en avance de certaines de ces pannes, permettant ainsi de rallonger le temps entre les révisions, et d'augmenter la durée de vie des appareils.

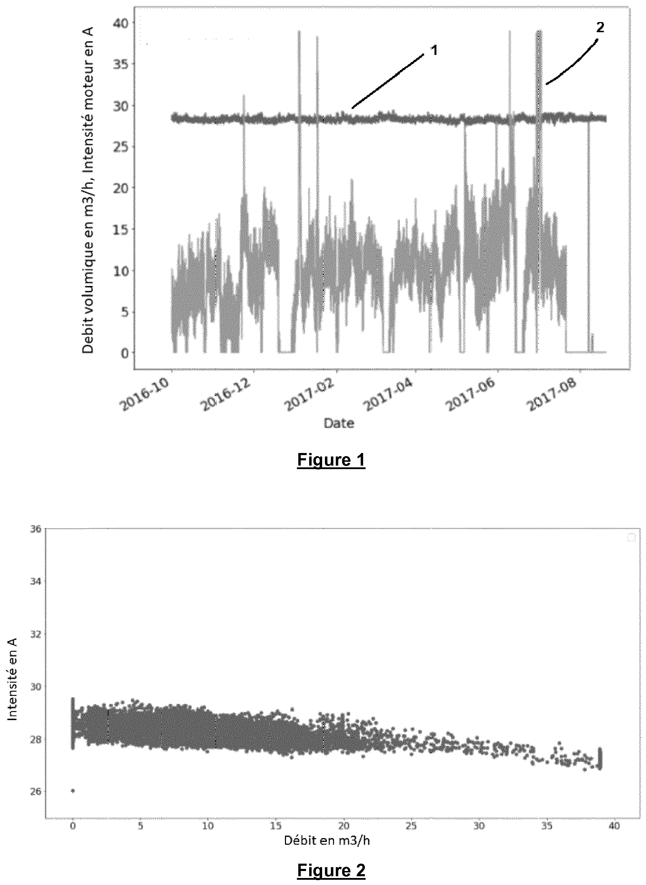

Comme on le verra plus en détails dans ce qui suit, la méthode selon la présente invention comprend la comparaison du débit de gaz (comportant de l'oxygène) injecté par l'appareil, à l'intensité du courant (débit de fluide/effluent) traversant cet appareil. [Fig. 1] annexée : Afin de mieux comprendre l'invention, examinons le graphe en figure 1 annexée, montrant deux signaux : débit d'oxygène (2, en m3/h) et intensité moteur/débit de fluide traversant l'appareil (1, en A), en fonction du temps, pendant une période de temps donnée d'environ 1 an sur 2016/2017. On notera que ces essais ont été réalisés à l'aide d'un appareil tel que celui illustré dans le document WO2012/160300 cité plus haut.

On voit alors qu'il est difficile de tirer des conclusions car les signaux sont relativement bruités, et on ne peut notamment pas déterminer si l'appareil d'injection d'oxygène mis en oeuvre sur cette station fonctionne correctement ou non.

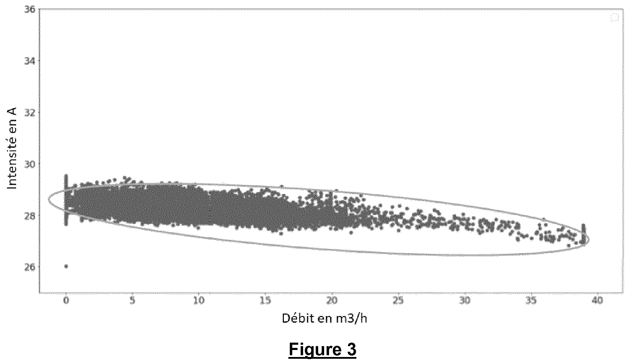

[Fig. 2] annexée et [Fig. 3] annexée : On décide alors (voir figure 2 et figure 3 annexées) de tracer une nouvelle courbe, représentant l'intensité (débit de fluide traversant l'appareil), cette fois ci, non pas en fonction du temps, mais en fonction du débit d'oxygène injecté par l'appareil dans le fluide traité (flux en m3/h).

Le signal est maintenant beaucoup plus cohérent. C'est à partir de ce signal que l'on propose de faire de la maintenance prédictive.
Le signal étant très cohérent, il est possible de tracer une zone (enveloppe oblongue sur la figure 3) délimitant un fonctionnement « normal » de l'unité.
Lorsque le signal va sortir de la zone délimitée pendant une période de temps considérée comme conséquente, par exemple une journée complète, on considère que l'on peut lancer une alerte et demander une maintenance prédictive de l'appareil.

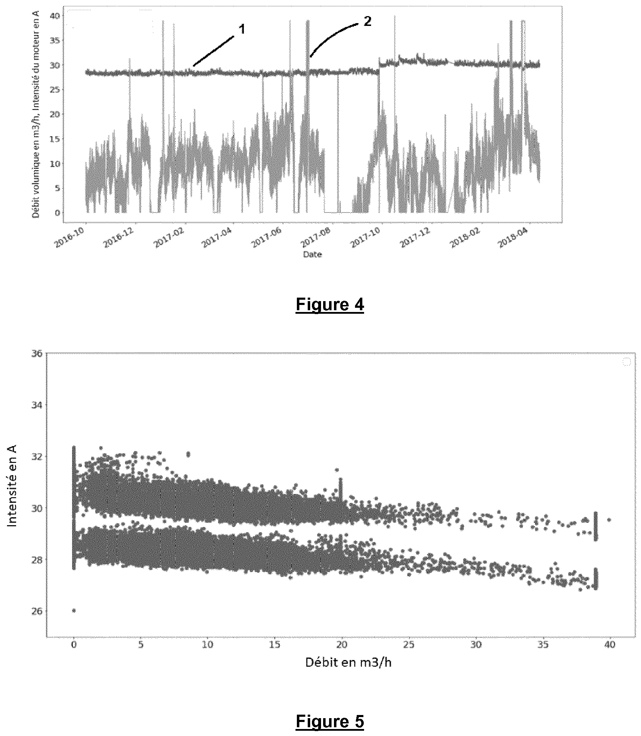

[Fig. 4] annexée et [Fig. 5] annexée : Pour confirmer l'efficacité de cette approche examinons les graphes annexés en figures 4 et 5, qui présentent les même signaux mais sur une période de deux ans sur 2016-2018.
Sur la figure 5, une nouvelle zone s'est rajoutée au-dessus de la zone correspondant au fonctionnement « normal », cette nouvelle zone s'est formée au-dessus de la première, elle correspond à une nouvelle période de fonctionnement de la machine qui a commencé au moment de sa révision périodique qui a eu lieu très précisément fin septembre 2017, comme on peut le voir également nettement sur la figure 4.

L'algorithme selon la présente invention permet de déterminer cette nouvelle période de fonctionnement automatiquement. De la même manière, il va pouvoir détecter des pannes, des pannes à venir, et autres anomalies.

Considérons l'exemple suivant d'algorithme de maintenance prédictive permettant la mise en oeuvre de l'invention :

1. Entraînement sur une période de temps $t_1$ à $t_m$ :

    a. Recueil des données d'intensité (I en A) et de débit de gaz $O_2$ (Q en $m^3/h$) qui définissent par eux-mêmes une zone de bon fonctionnement

$$Z = \{(Q_i, I_i)\}_{i=1..m}$$

2. Utilisation de l'algorithme pour $t > t_m$ :
Etant donné un nouveau pas de temps t, calcul de la distance entre le nouveau point de données et la zone de bon fonctionnement avec la formule suivante :

$$d = \sqrt{\frac{(Q(t) - Q_i)^2}{(1m^3/h)^2} + \frac{(I(t) - I_i)^2}{(1A)^2}}$$

permettant, on l'a vu, de détecter une anomalie et d'ordonner une opération de maintenance quand $d > \varepsilon$.

Exemple de durée considérée comme alertante : une journée complète.
Exemple de donnée $\varepsilon$ : 1.0

L'invention concerne alors une méthode d'opération d'une installation de traitement des eaux, installation munie d'un appareil d'injection d'un gaz comportant de l'oxygène dans un effluent, la méthode comportant une phase de détection d'anomalies dans le fonctionnement de l'appareil, se caractérisant en ce que la phase de détection d'anomalies comporte la mise en oeuvre des mesures suivantes :

- on dispose de données représentatives de l'état de fonctionnement de l'appareil, données comprenant des relevés en fonction du temps du débit de gaz injecté par l'appareil et des relevés en fonction du temps du courant/débit de fluide traversant l'appareil ;
- on dispose d'un système d'acquisition et de traitement de ces données, muni d'un algorithme de traitement de ces données, apte à réaliser les déterminations suivantes :

    a) à réaliser une phase d'apprentissage durant laquelle le système acquiert lesdits relevés, établit sur une période de temps d'apprentissage déterminée la courbe de variation de l'intensité du courant traversant l'appareil en fonction du débit de gaz injecté par l'appareil, et définit une zone/enveloppe englobant cette courbe, zone considérée comme délimitant un fonctionnement normal de l'appareil;
et
    b) à réaliser une phase d'utilisation de l'algorithme où le système acquiert en temps réel, sur une période de temps déterminée, la courbe de variation de l'intensité du courant traversant l'appareil en fonction du débit de gaz injecté par l'appareil, et à déterminer si le signal sort de ladite zone/enveloppe pendant une période de temps considérée comme représentative, qu'il doit conclure qu'une alerte doit être lancée, par exemple pour demander une maintenance prédictive de l'appareil .

levés en fonction du temps du courant/débit de fluide traversant l'appareil ;
- on dispose d'un système d'acquisition et de traitement de ces données, muni d'un algorithme de traitement de ces données, apte à réaliser les déterminations suivantes :

    a) à réaliser une phase d'apprentissage durant laquelle le système acquiert lesdits relevés, établit sur une période de temps d'apprentissage déterminée la courbe de variation de l'intensité du courant traversant l'appareil en fonction du débit de gaz injecté par l'appareil, et définit une zone/enveloppe englobant cette courbe, zone considérée comme délimitant un fonctionnement normal de l'appareil;
et
    b) à réaliser une phase d'utilisation de l'algorithme où le système acquiert en temps réel, sur une période de temps déterminée, la courbe de variation de l'intensité du courant traversant l'appareil en fonction du débit de gaz injecté par l'appareil, et à déterminer si le signal sort de ladite zone/enveloppe pendant une période de temps considérée comme représentative, qu'il faut conclure qu'une alerte doit être lancée, par exemple pour demander une maintenance prédictive de l'appareil .

## Revendications

1. Méthode d'opération d'une installation de traitement des eaux, installation munie d'un appareil d'injection d'un gaz comportant de l'oxygène dans un effluent, la méthode comportant une phase de détection d'anomalies dans le fonctionnement de l'appareil, **se caractérisant en ce que** la phase de détection d'anomalies comporte la mise en oeuvre des mesures suivantes :

    - on dispose de données représentatives de l'état de fonctionnement de l'appareil, données comprenant des relevés en fonction du temps du débit de gaz injecté par l'appareil et des re-

**Figure 1**

**Figure 2**

**Figure 3**

EP 3 712 736 A1

**Figure 4**

**Figure 5**

Europäisches
Patentamt

European
Patent Office

Office européen
des brevets

**RAPPORT DE RECHERCHE EUROPEENNE**

Numéro de la demande

EP 19 30 5358

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | WO 2012/160300 A1 (AIR LIQUIDE [FR]; MILTON ROY MIXING [FR] ET AL.) 29 novembre 2012 (2012-11-29) * page 1; figures 1, 2 * ----- | 1 | INV. G05B23/02 G05B15/02 B01F3/04 C02F3/04 G06Q50/10 |
| Y | WO 2016/132108 A1 (PULSAR PROCESS MEASUREMENT LTD [GB]) 25 août 2016 (2016-08-25) * pages 8-10; figures 2, 3 * ----- | 1 | |

**DOMAINES TECHNIQUES RECHERCHES (IPC)**

G05B
B01F
C02F
G06Q
F04D

Le présent rapport a été établi pour toutes les revendications

| Lieu de la recherche | Date d'achèvement de la recherche | Examinateur |
|---|---|---|
| Munich | 6 septembre 2019 | Juillot, Olivier J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 30 5358

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-09-2019

| Document brevet cité au rapport de recherche | Date de publication | Membre(s) de la famille de brevet(s) | Date de publication |
|---|---|---|---|
| WO 2012160300 A1 | 29-11-2012 | AU 2012260737 A1 | 09-01-2014 |
| | | BR 112013030204 A2 | 29-11-2016 |
| | | CA 2836889 A1 | 29-11-2012 |
| | | CN 102794121 A | 28-11-2012 |
| | | CN 103945927 A | 23-07-2014 |
| | | CN 202666718 U | 16-01-2013 |
| | | EP 2714256 A1 | 09-04-2014 |
| | | ES 2553981 T3 | 15-12-2015 |
| | | FR 2975606 A1 | 30-11-2012 |
| | | JP 5944491 B2 | 05-07-2016 |
| | | JP 2014517769 A | 24-07-2014 |
| | | US 2016060150 A1 | 03-03-2016 |
| | | US 2017305771 A1 | 26-10-2017 |
| | | WO 2012160300 A1 | 29-11-2012 |
| WO 2016132108 A1 | 25-08-2016 | EP 3259414 A1 | 27-12-2017 |
| | | GB 2537461 A | 19-10-2016 |
| | | US 2018045194 A1 | 15-02-2018 |
| | | WO 2016132108 A1 | 25-08-2016 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012160300 A1
- EP 995485 A
- FR 2594112 A1
- WO 2012160300 A